# EUROPEAN PATENT APPLICATION

(11) **EP 2 265 007 A2**
(43) Date of publication of application: **22.12.2010**
(21) Application number: 09704986.0
(22) Date of filing: 23.01.2009
(51) Int. Cl.: H04N 5/76

(54) **CONTENT RECORDING CONTROL METHOD FOR PEERS, AND A DEVICE THEREFOR**

(30) Priority: 29.01.2008 US 24314; 05.02.2008 US 26292
(71) Applicant: Samsung Electronics Co., Ltd., Suwon-si, Gyeonggi-do 442-742 (KR)
(72) Inventor: KIM, Mun-Jo, Suwon-si Gyeonggi-do 441-735 (KR); RHIM, Eun-Hee, Yongin-si Gyeonggi-do 446-720 (KR); LEE, Kwang-Kee, Seoul 138-240 (KR); HWANG, In-Chul, Suwon-si Gyeonggi-do 443-727 (KR)
(74) Representative: Waddington, Richard
(86) International application number: PCT/KR2009/000359
(87) International publication number: WO 2009/096684

(57) **Abstract**

A method of controlling content recording for a buddy of a management server. The method includes: receiving a recording request message for the buddy according to an external input; determining whether a local recording apparatus of the buddy is in a recording state; and selectively sending a recording start message to a recording apparatus on a network according to a result of the determining.

## Description

### TECHNICAL FIELD

The present invention relates to a method of controlling content recording for a buddy, and more particularly, to a method and apparatus for controlling content recording for a buddy by using a recording apparatus of the buddy or using a recording apparatus on a network.

### BACKGROUND ART

Personal video recorders (PVRs), which may record a broadcasting program selected by a user in a digital storage medium and then may reproduce the broadcasting program, has developed in correspondence with the development of digital broadcasting and with increases in capacity of a digital storage medium such as a hard disk.

PVRs include a local PVR, which records a broadcasting program in a local digital storage medium, and a network personal video recorder (NPVR), which records a broadcasting program in a digital storage medium disposed in a server on a network.

A user can record a broadcasting program by using the local PVR or the NPVR and reproduce the broadcasting program at a time desired by a next user.

Recently, besides basic recording and reproducing services provided by a PVR, user convenience may be increased by developing solutions to various scenarios.

### DISCLOSURE

### TECHNICAL SOLUTION

The present invention provides a method and apparatus for controlling content recording for a buddy by using a recording apparatus of the buddy or using a recording apparatus on a network in order to record contents for the buddy.

The present invention also provides a computer-readable recording medium having embodied thereon a program for executing the method.

### ADVANTAGEOUS EFFECTS

According to an embodiment of the present invention, content recording and reproducing for a user are possible by using a recording apparatus, and content recording and reproducing for a buddy are also possible. Thus, user convenience may be increased in terms of availability of the recording apparatus.

According to another embodiment of the present invention, content recording and reproducing services for a buddy can be provided, and a customized-service for an individual buddy and an advertisement service can also be provided. Thus, user convenience and service quality can be increased in terms of contents provision and contents availability.

### DESCRIPTION OF THE DRAWINGS

FIG. 1 is a schematic view illustrating a content recording control service for a buddy, according to an embodiment of the present invention;
FIG. 2 illustrates a recording request message format and a recording start message format, according to an embodiment of the present invention;
FIG. 3 illustrates a recording start message format that is updated to provide an advertisement service, according to another embodiment of the present invention;
FIG. 4 is a flowchart illustrating a method of controlling content recording for a buddy of a management server, according to an embodiment of the present invention;
FIG. 5 is a flowchart illustrating a recording process of a recording apparatus, according to an embodiment of the present invention;
FIG. 6 is a block diagram of a management server for controlling content recording for a buddy, according to an embodiment of the present invention; and
FIG. 7 is a block diagram of a recording apparatus for recording contents for a buddy, according to an embodiment of the present invention.

### BEST MODE

According to an aspect of the present invention, there is provided a method of controlling content recording for a buddy of a management server, the method including: receiving a recording request message for the buddy according to an external input; determining whether a local recording apparatus of the buddy is in a recording state; and selectively sending a recording start message to a recording apparatus on a network according to a result of the determining.

The method may further include sending a recording start message to the local recording apparatus of the buddy, when the local recording apparatus of the buddy is in a recording state.

The sending of the recording start message to the recording apparatus on the network may be performed when the local recording apparatus of the buddy is not in a recording state.

The recording request message and the recording start message may include at least one piece of information selected from the group consisting of content information, buddy information, and content password information.

The recording request message and the recording start message may be described in an extensible markup language (XML) format.

The determining of whether the local recording apparatus of the buddy is in a recording state may include receiving a state result message indicating whether recording is possible from the local recording apparatus of the buddy in response to a request of the management server.

The request of the management server may be performed by sending a state check message for checking whether recording is possible by the local recording apparatus of the buddy.

The method may further include updating the recording start message by using information for providing a personalized service and an advertisement service for the buddy.

According to an aspect of the present invention, there is also provided a method of recording, the method including: receiving a recording start message from a management server; performing content recording by using the received recording start message; and outputting a list of recorded contents to a buddy according to an external input.

According to an aspect of the present invention, there is also provided a computer-readable recording medium having embodied thereon a program for executing the method.

According to an aspect of the present invention, there is also provided a management server including: a receiving unit for receiving a recording request message for a buddy according to an external input; a determining unit for determining whether a local recording apparatus of the buddy is in a recording state; and a recording start unit for selectively sending a recording start message to a recording apparatus on a network according to a result of the determining.

According to an aspect of the present invention, there is also provided a recording apparatus including: a receiving unit for receiving a recording start message from a management server; a recording unit for performing content recording using the received recording start message; and a content list output unit for outputting a list of recorded contents to a buddy according to an external input.

### MODE FOR INVENTION

Hereinafter, the present invention will be described in detail by explaining exemplary embodiments of the invention with reference to the attached drawings. The same reference numerals in the drawings denote the same element. In the drawings, the thicknesses of layers and regions are exaggerated for clarity.

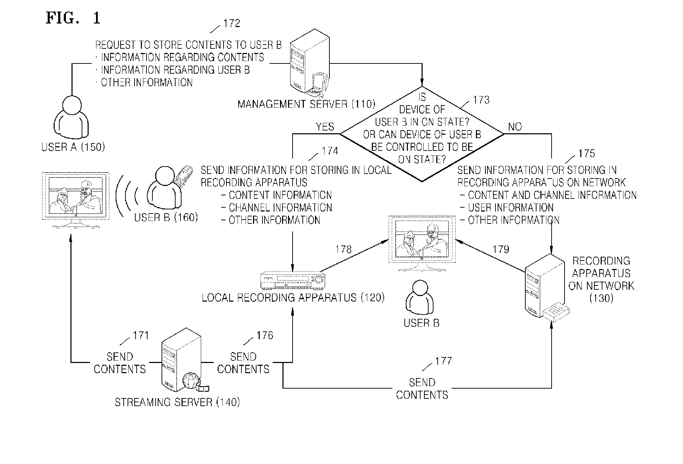

FIG. 1 is a schematic view illustrating a content recording control service for a buddy, according to an embodiment of the present invention.

The content recording control service includes a management server 110 on a network, a streaming server 140, a recording apparatus on a network 130, and a local recording apparatus 120.

The recording apparatus on the network 130 denotes a network personal video recorder (NPVR) that records a broadcasting program in a digital storage medium disposed in a server on the network. The local recording apparatus 120 denotes a local personal video recorder (PVR) that records a broadcasting program in a local digital storage medium. The recording apparatus 130 and the local recording apparatus 120 may be different apparatuses for performing the same function while advancing technologies.

The management server 110 controls the local recording apparatus 120 and the recording apparatus on the network 130 in order to record contents for a buddy. The streaming server 140 provides a digital broadcasting program in real time. Hereinafter, operations of the content recording control service for a buddy will be described below.

While a user A 150 is watching a broadcasting program provided by the streaming server 140 (171), the user A 150 may receive a request to record a specific channel that is presently on air from a buddy (a user B) 160. The user A 150 then sends desired content information, buddy information, and content password information pertaining to the buddy 160 to the management server 110 (172).

The management server 110 determines whether or not the local recording apparatus 120 of the buddy 160 is in a recording state (173).

When the local recording apparatus 120 of the buddy 160 is in a recording state, the management server 110 sends a recording start message including the content information, the buddy information, and the content password information to the local recording apparatus 120 of the buddy 160 (174). The local recording apparatus 120 of the buddy 160 records contents aired on the corresponding channel according to the recording start message received from the management server 110 (176).

Afterwards, when the buddy 160 desires to reproduce the contents aired on the recorded channel, the local recording apparatus 120 of the buddy 160 outputs a list of the contents recorded for the buddy 160 and reproduces selected contents (178).

When the local recording apparatus 120 of the buddy 160 is not in a recording state, the management server 110 sends a recording start message including the content information, the buddy information, and the content password information to the recording apparatus on the network 130 (175). The recording apparatus on the network 130 records contents aired on the corresponding channel according to the recording start message received from the management server 110 (177).

Afterwards, when the buddy 160 desires to reproduce the contents aired on the recorded channel, the recording apparatus on the network 130 outputs a list of contents recorded for the buddy 160 and reproduces selected contents (179).

According to the current embodiment, content recording and reproducing for a user are possible by using a recording apparatus, and content recording and reproducing for a buddy are also possible. Thus, user convenience may be increased in terms of availability of the recording apparatus.

Meanwhile, according to another embodiment of the present invention, the management server 110 updates a recording start message by using information for providing a personalized service and an advertisement service for the buddy 160, and sends the updated recording start message to the local recording apparatus 120 of the buddy 160 or the recording apparatus on the network 130. The local recording apparatus 120 or the recording apparatus on the network 130 that received the updated recording start message may receive the personalized service and the advertisement service through information that is specified to provide the personalized service and the advertisement service before reproducing contents.

According to the current embodiment, content recording and reproducing service for a buddy may be provided, and a personalized service and an advertisement service for a buddy may also be provided. Thus, user convenience and service quality may be increased in providing and using contents.

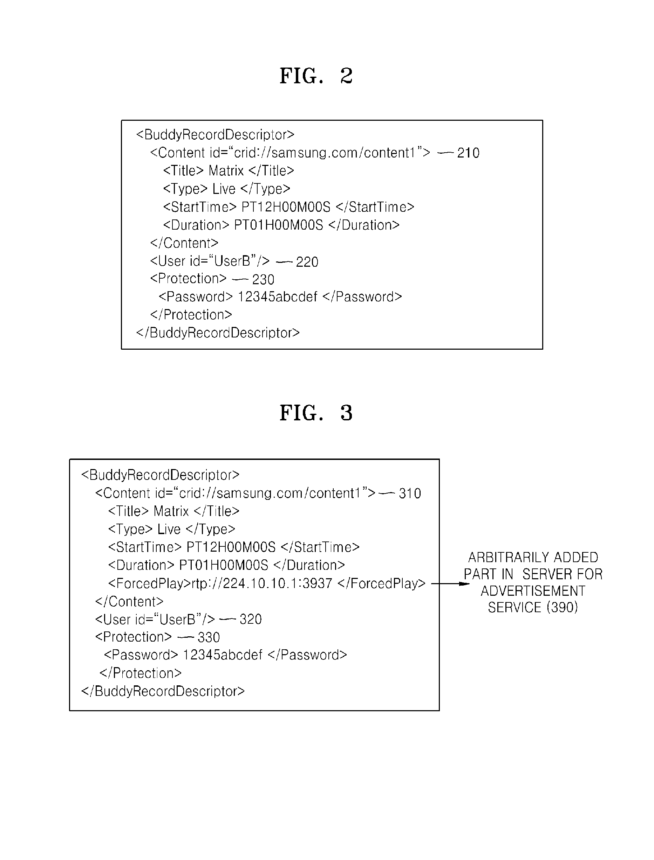

FIG. 2 illustrates a recording request message format and a recording start message format, according to an embodiment of the present invention.

The recording request message is sent from the user A 150 to the management server 110 in order to request recording for the buddy 160. The recording start message is sent from the management server 110 to the local recording apparatus 120 or the recording apparatus on the network 130 in order to control the local recording apparatus 120 or the recording apparatus on the network 130 to perform recording.

The recording request message and the recording start message include content information 210, buddy information 220, and content password information 230. Although the recording request message and the recording start message are described in an extensible markup language (XML) format in the current embodiment, they may also be described in another format. As illustrated in FIG. 2, the content information 210 includes a title, a type, a real-time broadcasting time, and a duration time of content. The buddy information 220 includes identifier information of the buddy 160. The content password information 230 includes password information for reproducing contents.

FIG. 3 illustrates a recording start message format that is updated to provide an advertisement service, according to another embodiment of the present invention.

When the local recording apparatus 120 or the recording apparatus on the network 130 reproduces contents for the buddy 160, the management server 110 may update a recording start message so as to include information to provide a personalized service and an advertisement service for the buddy 160.

FIG. 3 illustrates information 390 that is added to provide the advertisement service for the buddy 160. The local recording apparatus 120 or the recording apparatus on the network 130 that received the updated recording start message receives the advertisement service from an advertisement site specified by a uniform resource locator (URL) before reproducing contents.

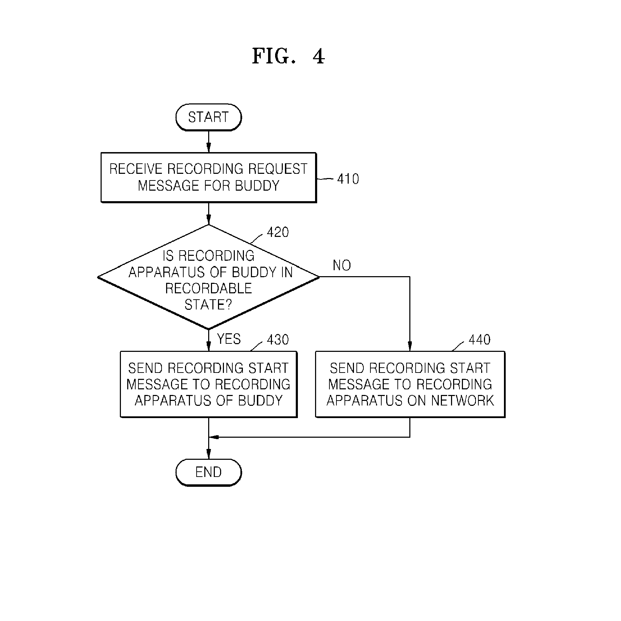

FIG. 4 is a flowchart illustrating a method of controlling content recording for a buddy of the management server 110, according to an embodiment of the present invention.

In operation 410, the management server 110 receives a recording request message for the buddy 160 by an external input.

In operation 420, the management server 110 determines whether the local recording apparatus 120 of the buddy 160 is in a recording state. If the local recording apparatus 120 of the buddy 160 is in a recording state, the method proceeds to operation 430, and if not, the method proceeds to operation 440. The management server 110 sends a state check message for checking whether recording is possible to the local recording apparatus 120 of the buddy 160 and then receives a state result message indicating whether recording is possible, and thus determines whether the local recording apparatus 120 of the buddy 160 is in a recording state. Although an RTSP ANNOUNCE message and a corresponding response message are used as a state check message and a state result message in the current embodiment, other messages may be used as the state check message and the state result message.

Operation 430 is performed when the local recording apparatus 120 of the buddy 160 is in a recording state. In operation 430, the management server 110 sends a recording start message to the local recording apparatus 120 of the buddy 160.

Operation 440 is performed when the local recording apparatus 120 of the buddy 160 is not in a recording state. In operation 440, the management server 110 sends a recording start message to the recording apparatus on the network 130.

The recording request message and the recording start message include content information, buddy information, and content password information. Although the recording request message and the recording start message are described in an XML format and are sent using hypertext transfer protocol (HTTP) in the current embodiment, the recording request message and the recording start message may be described in other formats and sent using other protocols.

Meanwhile, according to another embodiment, the management server 110 updates the recording start message by using information for providing a personalized service for the buddy 160 and an advertisement service, and sends the updated recording start message to the local recording apparatus 120 of the buddy 160 or the recording apparatus on the network 130.

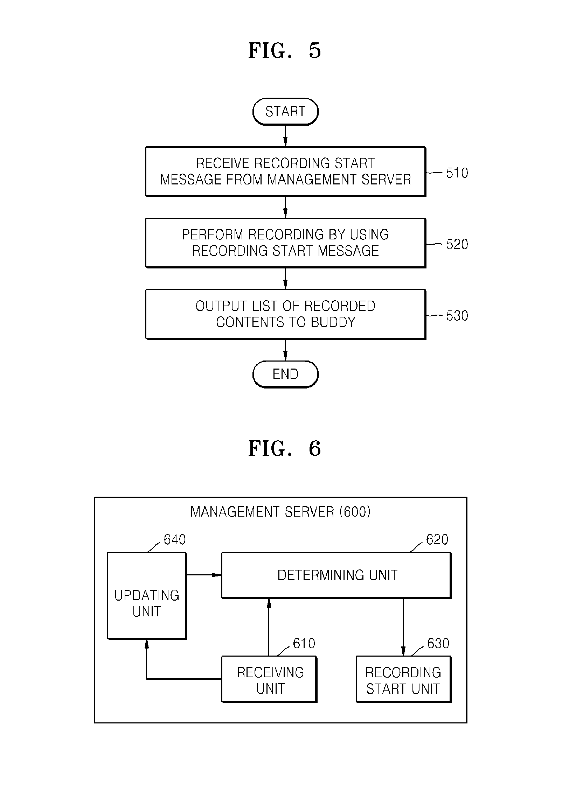

FIG. 5 is a flowchart illustrating a recording process of the local recording apparatus 120 and the recording apparatus on the network 130, according to an embodiment of the present invention.

In operation 510, the local recording apparatus 120 and the recording apparatus on the network 130 receive a recording start message from the management server 110. The recording start message includes content information, buddy information, and content password information. The local recording apparatus 120 and the recording apparatus on the network 130 store the received content password information.

In operation 520, the local recording apparatus 120 and the recording apparatus on the network 130 perform recording by using the received recording start message.

When a user desires to reproduce recorded contents, the local recording apparatus 120 and the recording apparatus on the network 130 output a list of the recorded contents to the buddy 160 according to an external input. The local recording apparatus 120 and the recording apparatus on the network 130 receive specific contents and content password information from the buddy 160 and then reproduce the contents.

FIG. 6 is a block diagram of a management server 600 for controlling content recording for a buddy, according to an embodiment of the present invention.

The management server 600 includes a receiving unit 610, a determining unit 620, a recording start unit 630, and an updating unit 640.

The receiving unit 610 receives a recording request message for the buddy 160 by an external input.

The determining unit 620 determines whether the local recording apparatus 120 of the buddy 160 is in a recording state. The determining unit 620 sends a state check message for checking whether recording is possible to the local recording apparatus 120 of the buddy 160 and then receives a state result message indicating whether recording is possible from the local recording apparatus 120 of the buddy 160, and thus determines whether the local recording apparatus 120 of the buddy 160 is in a recording state.

If the local recording apparatus 120 of the buddy 160 is in a recording state, the recording start unit 630 sends a recording start message to the local recording apparatus 120 of the buddy 160, and if not, sends a recording start message to the recording apparatus on the network 130.

The recording request message and the recording start message include content information, buddy information, and content password information. Although the recording request message and the recording start message are described in an XML format and sent using HTTP in the current embodiment, the recording request message and the recording start message may be described in other formats and sent using other protocols.

The updating unit 640 updates the recording start message by using information for providing a personalized service and an advertisement service for the buddy 160. The recording start unit 630 sends the updated recording start message to the local recording apparatus 120 of the buddy 160 or the recording apparatus on the network 130.

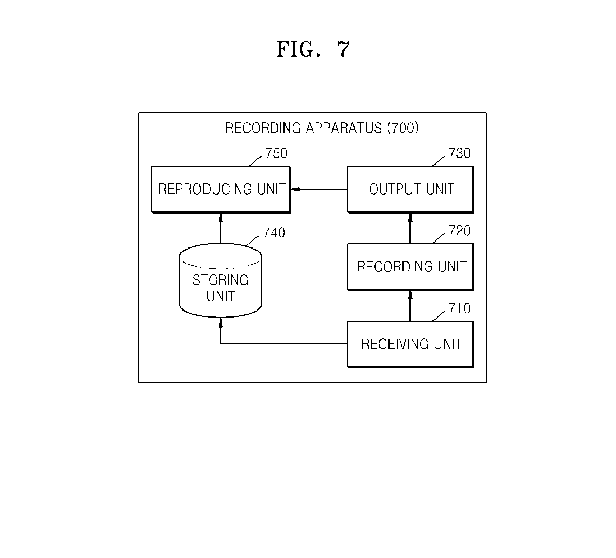

FIG. 7 is a block diagram of a recording apparatus 700 for recording contents for a buddy, according to an embodiment of the present invention.

The recording apparatus 700 includes a receiving unit 710, a recording unit 720, an output unit 730, a storing unit 740, and a reproducing unit 750.

The receiving unit 710 receives a recording start message from the management server 110. The recording start message includes content information, buddy information, and content password information.

The recording unit 720 performs recording by using the received recording start message.

When a user desires to reproduce recorded contents, the output unit 730 outputs a list of the recorded contents to the buddy 160 according to an external input.

The storing unit 740 stores the content password information included in the recording start message sent to the receiving unit 710.

The reproducing unit 750 receives specific contents and the content password information from the list of the contents that is output by the output unit 730 and then reproduces the contents.

The present invention can also be embodied as computer readable codes on a computer readable recording medium. The computer readable recording medium is any data storage device that can store data that can be thereafter read by a computer system. Examples of the computer readable recording medium include read-only memory (ROM), random-access memory (RAM), CD-ROMs, magnetic tapes, floppy disks, and optical data storage devices. The computer readable recording medium can also be distributed over network coupled computer systems so that the computer readable code is stored and executed in a distributed fashion.

While the present invention has been particularly shown and described with reference to exemplary embodiments thereof, it will be understood by one of ordinary skill in the art that various changes in form and details may be made therein without departing from the spirit and scope of the present invention as defined by the following claims. The preferred embodiments should be considered in descriptive sense only and not for purposes of limitation. Therefore, the scope of the invention is defined not by the detailed description of the invention but by the appended claims, and all differences within the scope will be construed as being included in the present invention.

## Claims

1. A method of controlling content recording for a buddy of a management server, the method comprising:
receiving a recording request message for the buddy according to an external input;
determining whether a local recording apparatus of the buddy is in a recording state; and
selectively sending a recording start message to a recording apparatus on a network according to a result of the determining.

2. The method of claim 1, further comprising sending a recording start message to the local recording apparatus of the buddy, when the local recording apparatus of the buddy is in a recording state.

3. The method of claim 1, wherein the sending of the recording start message to the recording apparatus on the network is performed when the local recording apparatus of the buddy is not in a recording state.

4. The method of claim 1, wherein the recording request message and the recording start message comprise at least one piece of information selected from the group consisting of content information, buddy information, and content password information.

5. The method of claim 4, wherein the recording request message and the recording start message are described in an extensible markup language (XML) format.

6. The method of claim 1, wherein the determining of whether the local recording apparatus of the buddy is in a recording state comprises receiving a state result message indicating whether recording is possible from the local recording apparatus of the buddy in response to a request of the management server.

7. The method of claim 6, wherein the request of the management server is performed by sending a state check message for checking whether recording is possible by the local recording apparatus of the buddy.

8. The method of claim 1, further comprising updating the recording start message by using information for providing a personalized service and an advertisement service for the buddy.

9. A method of recording, the method comprising:
receiving a recording start message from a management server;
performing content recording by using the received recording start message; and
outputting a list of recorded contents to a buddy according to an external input.

10. The method of claim 9, wherein the recording start message comprises at least one selected from the group consisting of content information, buddy information, and content password information.

11. The method of claim 10, further comprising:
storing the content password information; and
reproducing contents using the stored content password information.

12. The method of claim 9, wherein the method of recording is performed in a local recording apparatus of the buddy or in a recording apparatus on a network.

13. A management server comprising:
a receiving unit for receiving a recording request message for a buddy according to an external input;
a determining unit for determining whether a local recording apparatus of the buddy is in a recording state; and
a recording start unit for selectively sending a recording start message to a recording apparatus on a network according to a result of the determining.

14. The management server of claim 13, wherein, when the local recording apparatus of the buddy is in a recording state, the recording start unit sends a recording start message to the local recording apparatus of the buddy.

15. The management server of claim 13, wherein, when the local recording apparatus of the buddy is not in a recording state, the recording start unit sends a recording start message to the recording apparatus on the network.

16. The management server of claim 13, wherein the recording request message and the recording start message comprise at least one selected from the group consisting of content information, buddy information, and content password information.

17. The management server of claim 16, wherein the recording request message and the recording start message are described in an extensible markup language (XML) format.

18. The management server of claim 13, wherein the determining unit receives a state result message indicating whether recording is possible from the local recording apparatus of the buddy in response to a request of the management server.

19. The management server of claim 18, wherein the request of the management server is performed by sending a state check message for checking whether recording is possible by the local recording apparatus of the buddy.

20. The management server of claim 13, further comprising an updating unit for updating the recording start message by using information for providing a personalized service and an advertisement service for the buddy.

21. A recording apparatus comprising:
a receiving unit for receiving a recording start message from a management server;
a recording unit for performing content recording using the received recording start message; and
a content list output unit for outputting a list of recorded contents to a buddy according to an external input.

22. The recording apparatus of claim 21, wherein the recording start message comprises at least one selected from the group consisting of content information, buddy information, and content password information.

23. The recording apparatus of claim 22, further comprising:
a storing unit for storing the content password information; and
a reproducing unit for reproducing contents using the stored content password information.

24. The recording apparatus of claim 21, wherein the recording apparatus is a recording apparatus of the buddy or a local recording apparatus on a network.

25. A computer-readable recording medium having embodied thereon a program for executing any one method of claims 1 through 12.
